# EUROPEAN PATENT SPECIFICATION

(11) **EP 3 293 015 B1**
(45) Date of publication and mention of the grant of the patent: **19.12.2018**
(21) Application number: 17190091.3
(22) Date of filing: 08.09.2017
(51) Int. Cl.: B44C 1/10, E06B 3/70, F16B 5/06, F16B 5/12

(54) **A DOOR LEAF WITH A DECORATIVE STRIP**
TÜRBLATT MIT ZIERSTREIFEN
VANTAIL DE PORTE AVEC UNE BAGUETTE

(30) Priority: 12.09.2016 PL 41867016
(43) Date of publication of application: 14.03.2018
(73) Proprietor: Litwinski, Artur, 02-632 Warszawa (PL)
(72) Inventor: Litwinski, Artur, 02-632 Warszawa (PL)
(74) Representative: Budzinski, Slawomir

(56) References cited:
- DE-A1- 19 849 961
- FR-A1- 2 787 074
- FR-A1- 2 910 083
- US-A1- 2015 184 448

## Description

The invention provides a door leaf, in particular for a door, gate and garage door with at least one outer surface made of a metal sheet to which a decorative strip is attached. The decorative strip, usually made of metal, preferably of stainless steel, is used to decorate the door leaf made of a metal sheet.

For the purpose of decorating door leaves having at least outer surface made of a metal sheet, decorative strips are known that have usually a form of a flat bar and are adhered to the outer surface of the door leaf. This solution however entails a risk of delamination of the decorative strip.

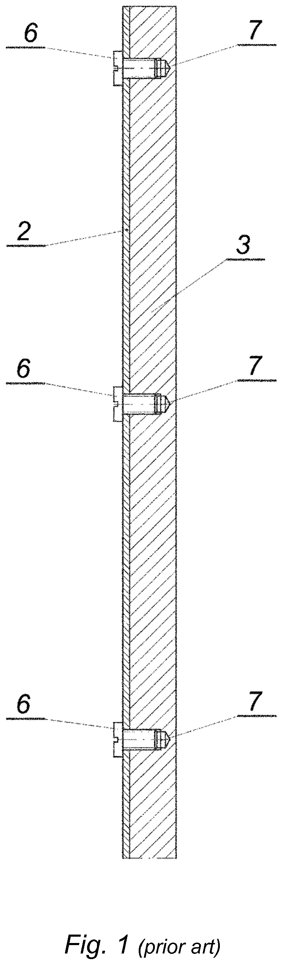

As shown in Fig. 1, decorative strips 3 are known, for decorating a door leaf, with at least one outer surface made of a metal sheet 2, having a form of a bar of a square or rectangle-like cross-section, provided with threaded bores 7 and screwed to the metal sheet 2 of the door plating by means of screws 6, where the heads of the screws 6 are positioned at the internal side of the sheet 2 of the plating. Such solution is durable, but it entails certain difficulties during manufacturing, since before assembling the door leaf plating it is necessary to screw the decorative strips 3, and then carry out the door leaf assembling process, and this makes it difficult to position such a door leaf in a flat press, since the decorative strips 3 protrude over the surface of the sheet 2 of the door plating.

Known door leaves may be solid but they may also comprise varied glazing. The number of decorative strips on a door leaf may vary. Glazing and decorative strips are used to make the door fit to interiors of diverse kinds. Decorative strips may be positioned vertically, for example at both sides of a vertical glazing, or horizontally. between horizontal glazing sections. Positioning of decorative strips on the surface of a door leaf may be chosen arbitrarily. Known decorative strips may have various shapes. They may extend rectilinearly, arcuately or in a fancy way. Most commonly they have a square or rectangular cross-section.

The object of the invention is to avoid the above presented difficulties during assembling of a door leaf provided with decorative strips, and to ensure a durable connection of decorative strips with the outer surface of a door leaf and thus to broaden selection of door leaves, in particular intended for a door, gate or garage door. FR 2 910 083 discloses a door leaf for a car, comprising the features according to the preambles of claims 1 and 7.

According to the first invention, a door leaf, in particular for a door, gate or garage door, with at least one outer surface made of a metal sheet to which a decorative strip is attached, is provided, wherein the outer surface of the door leaf made of a metal plane is provided with catch openings, and the decorative strip is made of an elastic material and has catches to cooperate with the catch openings. The catch openings are arranged on the outer surface of the door leaf along a line used for mounting the decorative strip, and the catches are arranged on the decorative strip, alternately at both sides of a line following the shape of the line along which the decorative strip is mounted on the outer surface of the door leaf.

Also preferably, the line, along which the decorative strip is mounted on the outer surface of the door leaf, is a straight line.

Also preferably, the catches on the decorative strip are equally spaced apart.

Also preferably, the catch opening has a circular shape of a diameter that is smaller than the width of the decorative strip, and the catch has a shape of a shank with an enlarged head, the head defining a catching portion and having a circular cross-section of a diameter that is not larger than the one of the catch opening, and the shank is of a smaller diameter than the one of the catching portion.

Also preferably, the catch opening has a rectangle-like shape of a smaller width than the width of the decorative strip; the catch has a shape of a hook, the catching portion of which is of a rectangular shape and sized as not larger than the corresponding size of the catch opening and extending from the shank at a right angle.

Also preferably, the outer shape of the door leaf is made of a steel sheet.

According to a second invention, a door leaf, in particular for a door, gate or garage door, with least one outer surface made of a metal sheet to which a decorative strip is attached, is provided, wherein the outer surface of the door leaf made of a metal sheet is provided with catch openings and the decorative strip is made of an elastic material and has catches to cooperate with the catch openings. The catches are arranged on the decorative strip along a line of the same shape as a line along which the decorative strip is mounted on the outer surface of the door leaf, and the catch openings are arranged on the outer surface of the door leaf, so as the centers of the catch openings are arranged alternately at both sides of the line along which the decorative strip is mounted on the outer surface of the door leaf.

Preferably, the line, along which the decorative strip is mounted on the outer surface of the door leaf, is a straight line.

Also preferably, the catches on the decorative strip are equally spaced apart.

Also preferably, the catch openings have a circular shape and are arranged within a lane that is narrower than the width of the decorative strip, and the catch has a form of a shank with an enlarged head, the head defining a catching portion and having a circular shape of a diameter that is not larger than the one of the catch opening, and the shank is a pin of a smaller diameter than the one of the catching portion of the catch.

Also preferably, the catch openings have a rectangle-like shape and are arranged within a lane that is narrower than the width of the decorative strip and the catch has a form of a hook with a catching portion sized as not larger than the corresponding size of the catch opening and extending from the shank at a right angle.

The outer surface of the door leaf is made of a metal sheet.

In the drawing Fig. 1 shows a decorative strip according to the prior art. The object of the invention is presented in embodiments in the drawing where Fig. 2 shows a door leaf with attached two decorative strips extending rectilinearly, in a front view of the door leaf; Fig. 3 shows a door leaf with two attached decorative strips extending arcuately, in a front view of the door leaf; Fig. 4 shows a strip according to the first invention, in a view from the catches side; Fig. 5 shows an arrangement of catch openings on the outer surface of a door leaf of the first invention; Fig. 6 shows a placement of catches in catch openings, of the first invention, upon attachment of a decorative strip; Fig. 7 shows a decorative strip of the first and second inventions, in a side view; Fig. 8 shows a decorative strip of the second invention, in a view from the catches side; Fig. 9 shows an arrangement of catch openings on the outer surface of a door leaf of the second invention; Fig. 10 shows a decorative strip mounted on the outer surface of a door leaf, with marked shaping of the decorative strip during assembling of the first and second inventions; and Fig. 11 shows a placement of catches in catch openings, according to the second invention, upon attachment of a decorative strip.

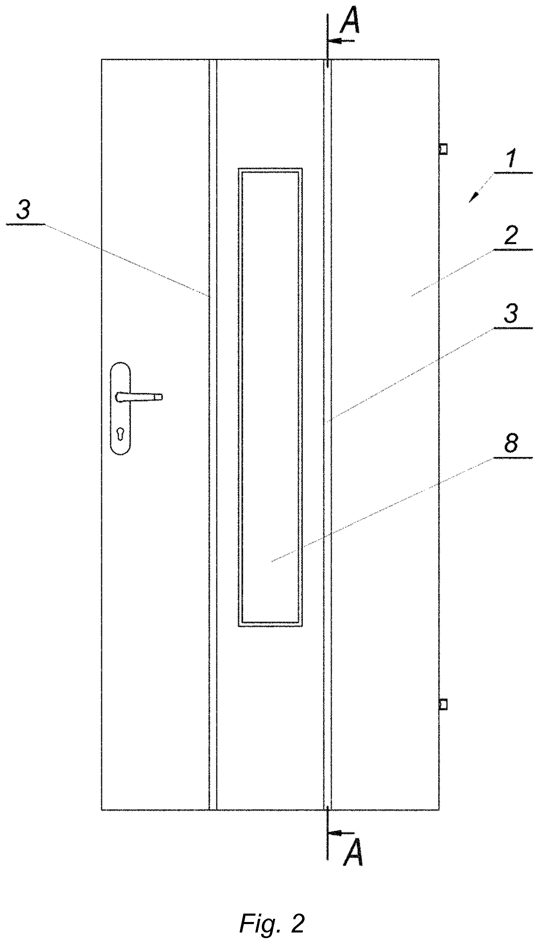

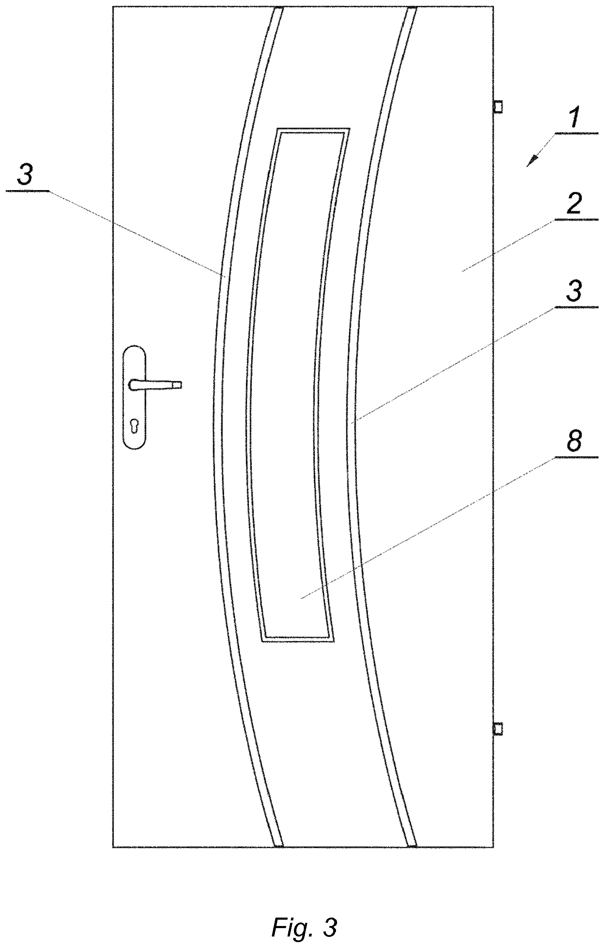

The invention provides a door leaf 1, in particular for a door, gate or garage door, with at least one outer surface 2 made of a metal sheet to which a decorative strip 3 is attached. As shown in Figs. 2 and 3, in an embodiment of the invention, a door leaf 1 has two decorative strips 3 arranged on the outer surface 2 at both sides of a glazing 8 positioned at the center of the door leaf 1. The decorative strips 3 reach top and bottom edges of the door leaf 1. In the embodiment of the invention shown in Fig. 2, the decorative strips 3 extend vertically, and in the embodiment shown in Fig. 3 they extend along an arc. Of course, in other embodiments the number of decorative strips 2, their length and arrangement on the outer surface 2 of a door leaf 1 may be quite different. They may extend horizontally or obliquely. They may be arranged along a straight line, an arc or in a fancy way. All this depends on the intended visual effect to be obtained so as to make a door leaf 1 matching a specific space.

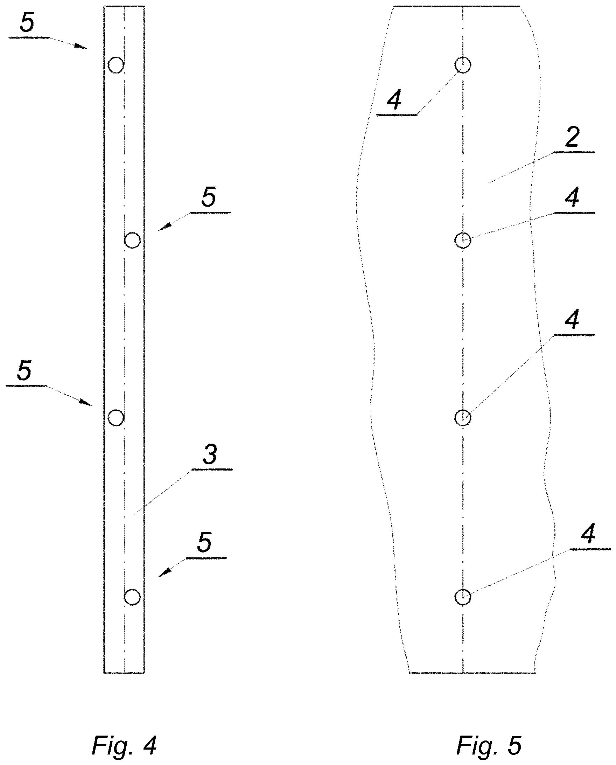

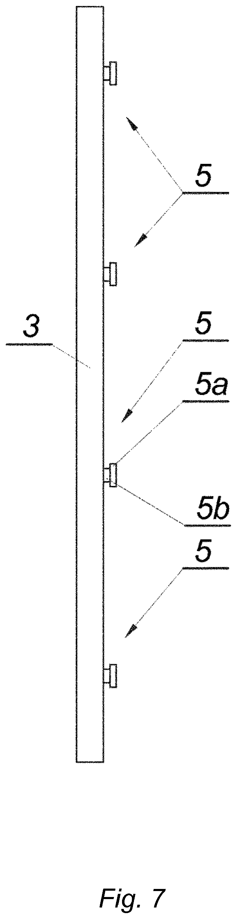

As shown in Fig. 5, in an embodiment of the first invention, an outer surface 2 of a door leaf 1 made of a metal sheet is provided with catch openings 4 arranged on the outer surface 2 of the door leaf 1 along a line on which a decorative strip 3 is mounted 3. In this embodiment this is a straight line. As shown in Figs. 4 and 7, the decorative strip 3 has catches 5 arranged on the decorative strip 3 alternately at both sides of a line of the same shape as a line along which the decorative strip 3 is mounted on the outer surface 2 of a door leaf 1, i.e., in this embodiment of the first invention, at both sides of a straight line. The catches 5 on the decorative strip 3 cooperate with catch openings 4 on the outer surface 2 of the door leaf 1. Distances between the catches 5 on the decorative strip 3 are equal. The catch opening 4 is of a circular shape, with a diameter smaller than the width of the decorative strip 3. This is aimed at making it invisible upon attachment of the decorative strip 3. The catch 5 has a form of a shank with an enlarged head, the head defining a catching portion 5a and having a circular shape of a diameter that is not larger than the one of the catch opening 4 while the shank 5b is a pin of a diameter that is smaller than the one of the catching portion 5a.

In another embodiment of the first invention a catch opening 4 has a rectangular-like shape of a width that is smaller than the width of a decorative strip 3, and a catch 5 has a form of a hook, a catching portion 5a of which is of a rectangular shape, sized as not larger than the corresponding size of the catch opening 4 and extending from a shank 5b at a right angle.

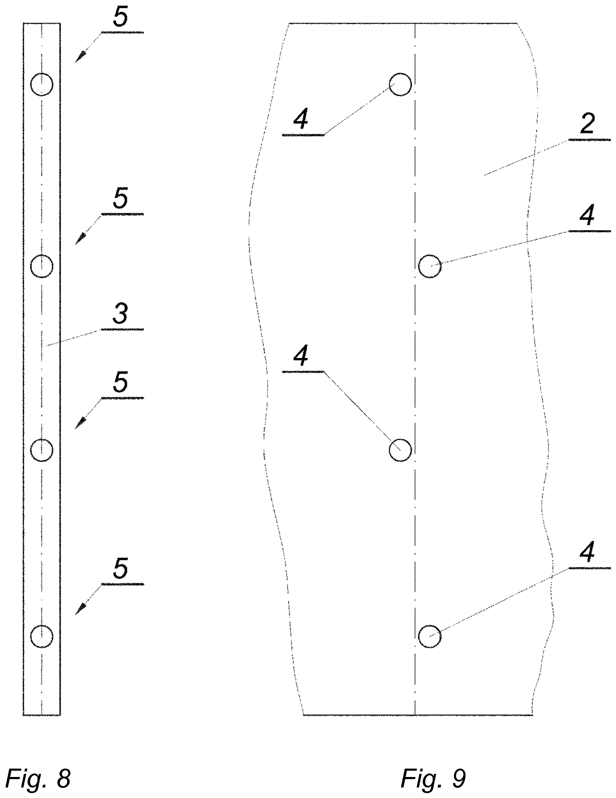

As shown in Fig. 9, in an embodiment of the second invention, an outer surface 2 of a door leaf 1 made of a metal sheet is provided with catch openings 4 arranged on the outer surface 2 of the door leaf 1 so as the centers of the catch openings 4 are arranged alternately at both sides of a line along which a decorative strip 3 is mounted on the outer surface 2 of the door leaf 1. In this embodiment of the second invention this is a straight line. As shown in Figs. 7 and 8 the decorative strip 3, made of an elastic material, has catches 5 to cooperate with catch openings 4, and the catches 5 are positioned on the decorative strip 3 along a line of the same shape as the one along which the decorative strip 3 is mounted on an outer surface 2 of a door leaf 1, i.e., in this embodiment of the second invention, along a straight line. Distances between the catches 5 on the decorative strip 3 are equal. The catch openings 4 are of a circular shape and are arranged within a lane that is narrower than the width of the decorative strip 3. This is aimed at making them invisible upon attachment of the decorative strip 3. The catch 5 has a form of a shank with an enlarged head, the head defining a catching portion 5a and having a circular shape of a diameter that is not larger than the one of the catch opening 4 while the shank 5b is a pin of a diameter that is smaller than the one of the catching portion 5a of the catch 5.

In another embodiment of the second invention, catch openings 4 are of a rectangle-like shape and are arranged within lane that is narrower than the width of a decorative strip 3; the catch 5 has a form of a hook, a catching portion 5a of which is of a rectangular shape, sized as not larger than the corresponding size of the catch opening 4 and extending from a shank 5b at a right angle.

In other embodiments of the first and second inventions, the distances between the individual catch openings 4 in an outer surface 2 of a door leaf 1 may be varied as long as they correspond to the distances between the individual catches 5 on the decorative strip 3.

In embodiments of the first and second inventions an outer surface 2 of a door leaf 1 is made of a steel sheet. It is obvious that in other embodiments of the invention another metal sheet such as copper or aluminum sheet, may be used for this purpose.

In embodiments of the first and second inventions a decorative strip 3 has a rectangular cross-section, but it should be obvious that in other embodiments of the first and second inventions cross-section of a decorative strip 3 may have another shape, such as semicircular, triangular, trapezoidal or fancy shapes.

Shape of catch openings 4 for the first and second inventions is circular and this provides an additional advantage of this solution, since openings of this shape may be made by drilling. Of course, in other embodiments, catch openings 4 may be of another shape, such as rectangular, square, ellipsoidal or oval shapes, but catch openings 4 of such shapes have to be made by cutting or milling. What is important is to maintain their width smaller than the width of a decorative strip 3; otherwise they would be visible upon attachment of the decorative strip 3.

In the first and second inventions, catches 5 are permanently secured to a decorative strip 3 in a manner known in the art. Shanks 5b of the catches 5 may be glued in blind bores drilled in a decorative strip 3 or glued directly to the surface of the decorative strip 3. They may be welded thereto or therewith. They may be also screwed into threaded bores in the decorative strip 3.

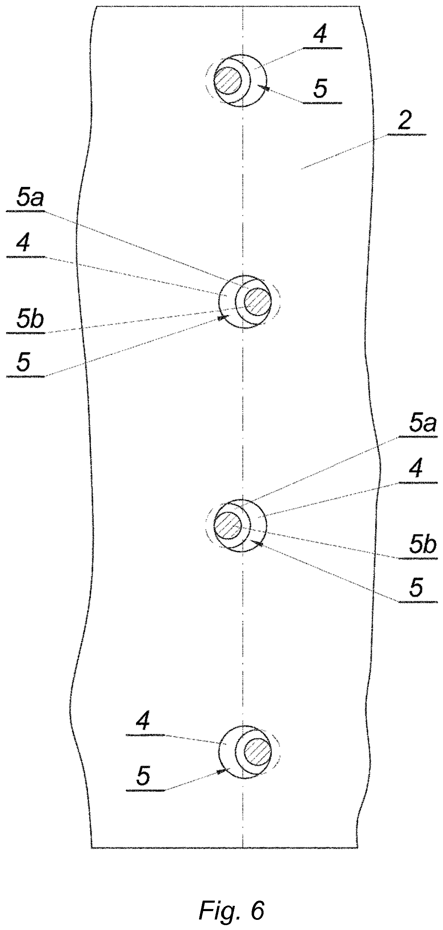

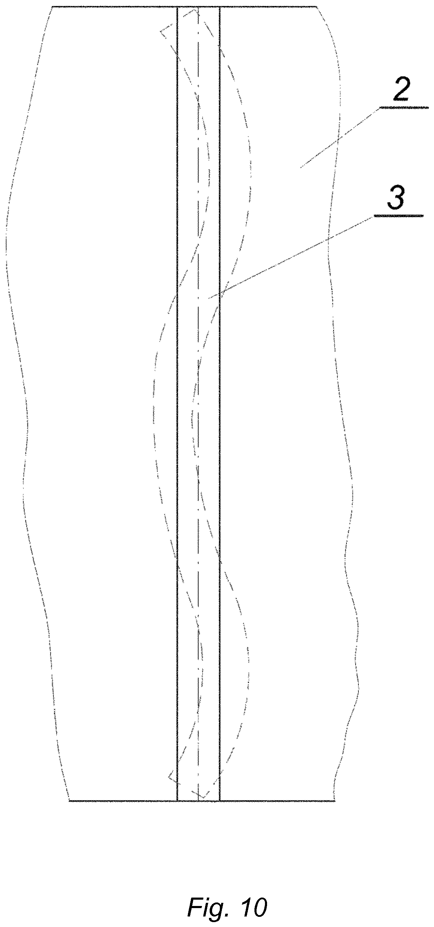

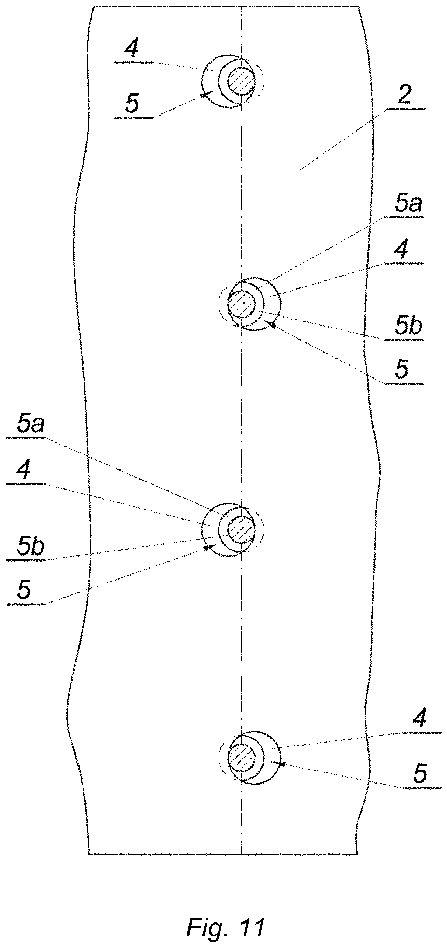

Both in the first and in the second inventions, catches 5 cooperate with catch openings 4. In order to mount a decorative strip 3 in an outer surface 2 of a door leaf 1 made of a metal sheet, it is necessary to position a catching portion 5a of a first catch 5 arranged on the decorative strip 3 into a first catch opening 4 on the outer surface 2 of the door leaf 1. Then the decorative strip 3 should be elastically deformed so as to introduce, into a second, neighboring catch opening 4, a catching portion 5a of a second catch 5 arranged on the decorative strip 3. Introduction of a catching portion 5a of a third, neighboring catch 5 arranged on the decorative strip 3 to a third, neighboring catch opening 4 on the outer surface 2 of the door leaf 1 requires deformation of the decorative strip 3 in the opposite direction than when introducing the second catch 5 to the second catch opening 4. Therefore, mounting of the decorative strip 3 involves bending the decorative strip 3 to one side and then to the other side, as shown by a broken line in Fig. 10. This is possible since the decorative strip 3 is made of an elastic material. The decorative strip 3, during straightening, causes locking of the catches 5 within the catch openings 4. Arrangement of catches 5 within catch openings 4 upon attachment of a decorative strip 3 on an outer surface 2 of a door leaf 1, in an embodiment of the first invention, is shown in Fig. 6, and, in an embodiment of the second invention, it is shown in Fig. 11. Such mutual positioning of the cooperating catches 5 arranged on the decorative strip 3 and of the catch openings 4 on the outer surface 2 of the door leaf 1, for the first and second inventions, ensures durability of the attachment of the decorative strip 3 to the outer surface 2 of the door leaf 1. Disengagement is possible only with the use of a considerable force.

This kind of attachment enables stable securing of a decorative strip 3 to a finished door leaf 1, after it is mounted and assembled in the production process and all the necessary technology steps are completed, as a final operation.

It will be clear that this invention is not to be limited to the embodiments shown and that numerous modifications/combinations thereof are possible within the scope of the patent claims.

## Claims

1. A door leaf, in particular for a door, gate and a garage door, with at least one outer surface made of a metal sheet to which a decorative strip is attached, wherein the outer surface (2) of the door leaf (1) made of a metal sheet is provided with catch openings (4) and the decorative strip (3) is made of an elastic material and has catches (5) to cooperate with the catch openings (4), where the catch openings (4) are arranged on the outer surface (2) of the door leaf (1) along a line along which the decorative strip (3) is mounted, **characterized in that** the catches (5) are arranged on the decorative strip (3) alternately at both sides of a line of the same shape as the line along which the decorative strip (3) is mounted on the outer surface (2) of the door leaf (1).

2. A door leaf of claim 1 **characterized in that** the line along which the decorative strip (3) is mounted to the outer surface (2) of the door leaf (1) is a straight line.

3. A door leaf of claim 1 **characterized in that** the distances between the catches (5) on the decorative strip (3) are equal.

4. A door leaf of claim 1 **characterized in that** the catch opening (4) is of a circular shape of a diameter that is smaller than width of the decorative strip (3), and the catch (5) has a form of a shank with an enlarged head, the head defining a catching portion (5a) and having a circular shape of a diameter that is not larger than the one of the catch opening (4) while the shank (5b) is a pin of a diameter that is smaller than the one of the catching portion (5a).

5. A door leaf of claim 1 **characterized in that** the catch opening (4) is of a rectangle-like shape of a width that is smaller than the width of the decorative strip (3), and the catch (5) has a form of a hook the catching portion of which (5a) has a rectangular shape and is sized as not larger than the corresponding size of the catch opening (4) and extends from the shank (5b) at a right angle.

6. A door leaf of claim 1 **characterized in that** the outer surface (2) of the door leaf (1) is made of a steel sheet.

7. A door leaf, in particular for a door, gate and garage door, with at least outer surface made of a metal sheet to which a decorative strip is attached, wherein the outer surface (2) of the door leaf (1) made of a metal sheet is provided with catch openings (4) and the decorative strip (3) is made of an elastic material and has catches (5) to cooperate with the catch openings (4), where the catches (5) are arranged on the decorative strip (3) along a line of the same shape as a line along which the decorative strip (3) is mounted on the outer surface (2) of the door leaf (1), **characterized in that** the catch openings (4) are arranged on the outer surface (2) of the door leaf (1) so as the centers of the catch openings (5) are arranged alternately at both sides of the line along which the decorative strip (3) is mounted on the outer surface (2) of the door leaf (1).

8. A door leaf of claim 7 **characterized in that** the line along which the decorative strip (3) is mounted on the outer surface (2) of the door leaf (1) is a straight line.

9. A door leaf of claim 1 **characterized in that** the distances between the catches (5) in the decorative strip (3) are equal.

10. A door leaf of claim 7 **characterized in that** the catch openings (4) are of a circular shape and are arranged within a lane that is narrower than the width of the decorative strip (3), and the catch (5) has a form of a shank with an enlarged head, the head defining a catching portion (5a) and having a circular shape of a diameter that is not larger than the one of the catch opening (4) while the shank (5b) is a pin of a diameter that is smaller than the one of the catching portion (5a) of the catch (5).

11. A door leaf of claim 7 **characterized in that** the catch openings (4) have a rectangle-like shape and are arranged within a lane that is narrower than the width of the decorative strip (3); and the catch (5) has a form of a hook, the catching portion (5a) of which is of a rectangular shape sized as not larger than the corresponding size of the catch opening (4) and extends from the shank (5b) at a right angle.

12. A door leaf of claim 7 **characterized in that** the outer surface (2) of the door leaf (1) is made of a steel sheet.

## Patentansprüche

1. Türblatt, insbesondere für eine Tür, ein Tor und ein Garagentor, mit mindestens einer aus Blech ausgeführten Außenfläche, an der ein Zierstreifen befestigt ist, wobei die aus Blech ausgeführte Außenfläche (2) des Türblattes (1) mit Fangöffnungen (4) versehen ist und der Zierstreifen (3) aus einem elastischen Material ausgeführt ist und Fangelemente (5) hat, die mit den Fangöffnungen (4) zusammenwirken, wobei die Fangöffnungen (4) an der Außenfläche (2) des Türblattes (1) entlang einer Linie, entlang derer der Zierstreifen (3) angebracht ist, angeordnet sind, **dadurch gekennzeichnet, dass** die Fangelemente (5) an dem Zierstreifen (3) abwechselnd auf beiden Seiten einer Linie der gleichen Gestalt wie die Linie, entlang derer der Zierstreifen (3) an der Außenfläche (2) des Türblattes (1) angebracht ist, angeordnet sind.

2. Türblatt nach Anspruch 1, **dadurch gekennzeichnet, dass** die Linie, entlang derer der Zierstreifen (3) an der Außenfläche (2) des Türblattes (1) angebracht ist, eine gerade Linie ist.

3. Türblatt nach Anspruch 1, **dadurch gekennzeichnet, dass** die Abstände zwischen die Fangelemente (5) an dem Zierstreifen (3) gleich sind.

4. Türblatt nach Anspruch 1, **dadurch gekennzeichnet, dass** die Fangöffnung (4) eine kreisförmige Gestalt mit einem Durchmesser hat, der kleiner als die Breite des Zierstreifens (3) ist und das Fangelement (5) eine Form eines Schaftes mit einem vergrößerten Kopf hat, wobei der Kopf einen Fangabschnitt (5a) definiert und eine kreisförmige Gestalt mit einem Durchmesser hat, der nicht größer als der der Fangöffnung (4) ist, während der Schaft (5b) ein Bolzen mit einem Durchmesser ist, der kleiner als der des Fangabschnitts (5a) ist.

5. Türblatt nach Anspruch 1, **dadurch gekennzeichnet, dass** die Fangöffnung (4) eine Rechteck-ähnliche Gestalt mit einer Breite hat, die kleiner als die Breite des Zierstreifens (3) ist und das Fangelement (5) eine Form eines Hakens hat, dessen Fangabschnitt (5a) eine rechteckige Gestalt hat und eine Größe hat, die nicht größer als die entsprechende Größe der Fangöffnung (4) ist, und sich rechtwinklig von dem Schaft (5b) erstreckt.

6. Türblatt nach Anspruch 1, **dadurch gekennzeichnet, dass** die Außenfläche (2) des Türblattes (1) aus Stahlblech ausgeführt ist.

7. Türblatt, insbesondere für eine Tür, ein Tor und ein Garagentor, mit mindestens einer aus Blech ausgeführten Außenfläche, an der ein Zierstreifen befestigt ist, wobei die aus Blech ausgeführte Außenfläche (2) des Türblattes (1) mit Fangöffnungen (4) versehen ist und der Zierstreifen (3) aus einem elastischen Material ausgeführt ist und Fangelemente (5) hat, die mit den Fangöffnungen (4) zusammenwirken, wobei die Fangelemente (5) an dem Zierstreifen (3) entlang einer Linie der gleichen Gestalt wie eine Linie, entlang derer der Zierstreifen (3) an der Außenfläche (2) des Türblattes (1) angebracht ist, angeordnet sind, **dadurch gekennzeichnet, dass** die Fangöffnungen (4) an der Außenfläche (2) des Türblattes (1) angeordnet sind, so dass die Mitten der Fangöffnungen (5) abwechselnd auf beiden Seiten der Linie, entlang derer der Zierstreifen (3) an der Außenfläche (2) des Türblattes (1) angebracht ist, angeordnet sind.

8. Türblatt nach Anspruch 7, **dadurch gekennzeichnet, dass** die Linie, entlang derer der Zierstreifen (3) an der Außenfläche (2) des Türblattes (1) angebracht ist, eine gerade Linie ist.

9. Türblatt nach Anspruch 1, **dadurch gekennzeichnet, dass** die Abstände zwischen die Fangelemente (5) in dem Zierstreifen (3) gleich sind.

10. Türblatt nach Anspruch 7, **dadurch gekennzeichnet, dass** die Fangöffnungen (4) eine kreisförmige Gestalt haben und innerhalb eines Gürtels angeordnet sind, der schmaler als die Breite des Zierstreifens (3) ist und das Fangelement (5) eine Form eines Schaftes mit einem vergrößerten Kopf hat, wobei der Kopf einen Fangabschnitt (5a) definiert und eine kreisförmige Gestalt mit einem Durchmesser hat, der nicht größer als der der Fangöffnung (4) ist, während der Schaft (5b) ein Bolzen mit einem Durchmesser ist, der kleiner als der des Fangabschnitts (5a) des Fangelements (5) ist.

11. Türblatt nach Anspruch 7, **dadurch gekennzeichnet, dass** die Fangöffnungen (4) eine Rechteck-ähnliche Gestalt haben und innerhalb eines Gürtels angeordnet sind, der schmaler als die Breite des Zierstreifens (3) ist; und das Fangelement (5) eine Form eines Hakens hat, dessen Fangabschnitt (5a) eine rechteckige Gestalt von einer Größe hat, die nicht größer als die entsprechende Größe der Fangöffnung (4) ist, und sich rechtwinklig von dem Schaft (5b) erstreckt.

12. Türblatt nach Anspruch 7, **dadurch gekennzeichnet, dass** die Außenfläche (2) des Türblattes (1) aus Stahlblech ausgeführt ist.

## Revendications

1. Vantail de porte, en particulier pour une porte, un portail et une porte de garage, avec au moins une surface extérieure constituée d'une feuille de metal, à laquelle est attachée une bande décorative, où
la surface extérieure (2) du ventail (1) de porte, constituée d'une feuille de métal, est prévue des ouvertures de capture (4) et la bande décorative (3) est faite d'un matériau élastique, et a des captures (5) pour coopérer avec les ouvertures de capture (4), où les ouvertures de capture (4) sont disposées sur la surface extérieure (2) du ventail (1) de porte le long d'une ligne le long de laquelle la bande decorative (3) est montée, **caractérisé en ce que**
les captures (5) sont disposées sur la bande decorative (3) alternativement des deux côtés d'une ligne de la même forme que la ligne le long de laquelle la bande décorative (3) est montée sur la surface extérieure (2) du ventail (1) de porte.

2. Vantail de porte selon la revendication 1, **caractérisé en ce que** la ligne le long de laquelle la bande décorative (3) est montée sur la surface extérieure (2) du ventail (1) de porte est une ligne droite.

3. Vantail de porte selon la revendication 1, **caractérisé en ce que** les distances entre les captures (5) de la bande décorative (3) sont égales.

4. Vantail de porte selon la revendication 1 **caractérisé en ce que** l'ouverture de capture (4) est de forme circulaire de diamètre inférieur à la largeur de la bande décorative (3), et la capture (5) a une forme d'une tige avec la tête élargie, la tête définissant une partie de capture (5 a) ayant une forme circulaire d'un diamètre qui n'est pas plus grand que celui de l'ouverture de capture (4) tandis que la tige est une goupille d'un diamètre inférieur à celui de la partie de capture (5a).

5. Vantail de porte selon la revendication 1, **caractérisé en ce que** l'ouverture de capture (4) est en forme de rectangle d'une largeur inférieure à la largeur de la bande décorative (3), et la capture (5) a une forme de crochet, dont la partie de capture (5 a) a une forme rectangulaire et est dimensionnée pour ne pas être plus grande que la taille correspondante de l'ouverture de capture (4) et s'étend à partir de la tige (5b) à angle droit.

6. Vantail de porte selon la revendication 1, **caractérisé en ce que** la surface extérieure (2) du ventail (1) de porte est constituée d'une feuille d'acier.

7. Vantail de porte, en particulier pour une porte, un portail et une porte de garage, avec au moins une surface extérieure constituée d'une feuille de métal à laquelle est fixée une bande decorative, où la surface extérieure (2) du vantail (1) de porte, constituée d'une feuille de métal, est prévue des ouvertures de capture (4) et la bande décorative (3) est faite d'un matériau élastique, et a des captures (5) pour coopérer avec les ouvertures de capture (4), où les captures (5) sont disposées sur la bande decorative (3) le long d'une ligne de la même forme que la ligne le long de laquelle la bande decorative (3) est montée sur la surface extérieure (2) du ventail (1) de porte
**caractérisé en ce que** les ouvertures de capture (4) sont disposées sur la surface extérieure (2) du vantail (1) de porte de sorte que les centres des ouvertures de capture (5) sont disposés alternativement des deux côtés de la ligne le long de laquelle la bande décorative (3) est montée sur la surface extérieure (2) du vantail (1) de porte.

8. Vantail de porte selon la revendication 7, **caractérisé en ce que** la ligne le long de laquelle la bande décorative (3) est montée sur la surface extérieure (2) du vantail (1) de porte est une ligne droite.

9. Vantail de porte selon la revendication 1, **caractérisé en ce que** les distances entre les captures (5) dans la bande décorative (3) sont égales.

10. Vantail de porte selon la revendication 7, **caractérisé en ce que** les ouvertures de capture (4) sont de forme circulaire et sont disposées dans une voie plus étroite que la largeur de la bande décorative (3), et la capture (5) a la forme d'une tige avec la tête élargie, la tête définissant une partie de capture (5 a) ayant une forme circulaire d'un diamètre qui n'est pas plus grand que celui de l'ouverture de capture (4), tandis que la tige (5b) est une goupille d'un diamètre inférieur à celui de la partie de capture (5a) de la capture (5)

11. Vantail de porte selon la revendication 7, **caractérisé en ce que** les ouvertures de capture (4) ont une forme de rectangle et sont disposés dans une voie plus étroite que la largeur de la bande decorative (3); et la capture (5) a une forme de crochet, dont la partie de capture (5 a) a une forme rectangulaire et est dimensionnée pour ne pas être plus grande que la taille correspondante de l'ouverture de capture (4) et s'étend à partir de la tige (5b) à angle droit.

12. Vantail de porte selon la revendication 7, **caractérisé en ce que** la surface extérieure (2) du vantail (1) de porte est constituée d'une feuille de métal.
